# EUROPÄISCHE PATENTSCHRIFT

(11) **EP 2 228 549 B1**
(45) Veröffentlichungstag und Bekanntmachung des Hinweises auf die Patenterteilung: **25.04.2012**
(21) Anmeldenummer: 09154636.6
(22) Anmeldetag: 09.03.2009
(51) Int. Cl.: F16B 15/08

(54) **Magazinstreifen für Schieferplattenhaken**
Magazine strip for plate hooks
Ruban de stockage pour crochet de plaque d'ardoise

(43) Veröffentlichungstag der Anmeldung: 15.09.2010
(73) Patentinhaber: Fabricius Fastener GmbH, 33100 Paderborn (DE)
(72) Erfinder: Fabricius, Jürgen, 33102, Paderborn (DE)
(74) Vertreter: Reimann, Silke

(56) Entgegenhaltungen:
- EP-A- 0 864 706
- EP-A- 1 431 590

## Beschreibung

Die Erfindung betrifft einen Magazinstreifen zum Halten von mehreren Schieferplattenhaken, die einenends eine abgewinkelte Spitze und andernends einen Haken aufweisen, wozu der Magazinstreifen aus einem einteiligen streifenförmigen Träger besteht, aus dessen einer Flachseite sich zueinander parallel Lamellen erstrecken, zwischen denen die Schieferplattenhaken jeweils in deren mittleren Bereich zwischen deren Spitze und deren Haken seitlich fixiert zu haltern sind.

Ein derartiger Magazinstreifen ist aus der EP 0 864 706 A1 bekannt. Die vorbekannten Schieferplattenhaken weisen einen geraden mittleren Bereich auf, und dementsprechend bilden die Lamellen gerade Kanäle zu deren Aufnahme. Diese sind jedoch wesentlich kürzer als die mittleren Bereiche, so dass axial kein Formschluss besteht und die Schieferplattenhaken für ein maschinelles Vernageln keine ausreichend genaue Position erhalten. Es ist ein so hoher federelastischer Kraftschluss der zweiteiligen Lamellen vorgesehen, dass der Träger verbogen werden muss, wenn die Schieferplattenhaken entnommen werden sollen.

Schieferplattenhaken finden eine vielseitige Anwendung zur Befestigung von Schieferplatten auf einer Tragkonstruktion aus Holz auf Dächern oder an Fassaden. Dabei werden traditionell die Schieferplattenhaken vom Dachdecker in einer Gürteltasche mitgeführt und Stück für Stück von Hand mit einem Hammer eingeschlagen. Dies ist ein arbeits- und zeitaufwendiges Verfahren, bei dem es immer wieder vorkommt, dass Schieferplattenhaken herunterfallen und damit verloren gehen.

In neuerer Zeit setzt sich immer mehr der Einsatz von Bolzenschubgeräten durch, in denen ein Treibkolben elektrisch, hydraulisch oder pneumatisch schlagartig bewegt wird. Sie dienen dazu Befestigungsmittel, wie beispielsweise Stahlnägel oder Schrauben, zur Befestigung von Gegenständen in einen Untergrund einzuschießen. Typischerweise wird eine Vielzahl von Befestigungsmitteln auf einem flachen schmalen Band aus Pappe oder Kunstgewebe angeordnet und dem Gerät zugeführt, das diese verarbeitet. Nachteilig an diesem Verfahren ist, dass das Band nach dem Gebrauch verbraucht ist. Das Band ist zerstört und kann nicht wieder verwendet werden. Beispielsweise wird in der Patentanmeldung EP 1 431 590 A1 ein Magazinstreifen für Schrauben beschrieben, die mit einem Schraubgerät verarbeitet werden sollen. Dieser Magazinstreifen ist nicht zum Einschlagen von Schieferplattenhaken geeignet, da diese keinen Schraubkopf besitzen, an denen sie eingeschraubt werden könnten. Weiterhin ist der beschriebenen Magazinstreifen mehrteilig und wird bei der Verarbeitung zerstört. Der Erfindung liegt die Aufgabe zugrunde, einen Magazinstreifen für ein präzises Halten und einfaches maschinelles Setzen von Schieferplattenhaken zu schaffen, der einfach aufgebaut und wieder verwendbar ist.

Diese Aufgabe wird durch die Merkmale des Anspruch 1 gelöst.
Ausführungsformen der Erfindung sind in den abhängigen Ansprüchen angegeben.

Der Erfindung liegt die Idee zugrunde, einen Magazinstreifen anzugeben, welcher es ermöglicht, mehrere Schieferplattenhaken zu halten und einer Nagelmaschine zuzuführen, die auf den Magazinstreifen abgestimmt ist.

Der erfindungsgemäße Magazinstreifen geht von einem Schieferplattenhaken aus, der einenends eine zur Längsrichtung abgewinkelte Spitze besitzt, mit dem er in die Tragkonstruktion gesetzt wird, andernends einen Haken besitzt, in den Schieferplatten unterschiedlicher Größe und Dicke einzuschieben sind, und der in einem mittleren Bereich mit einer Sicke ausgestattet ist, deren Einbuchtung quer zur Spitze liegt.
Der Magazinstreifen wird aus einem einzigen zusammenhängenden Träger gebildet.

Der Magazinstreifen soll natürlich so in die Nagelmaschine eingeführt werden, dass nicht nur der Magazinstreifen in der richtigen Richtung eingeschoben wird, sondern dabei auch die Schieferplattenhaken in der richtigen Orientierung angeordnet sind. Zu diesem Zweck und zur Zuführung der Schieferplattenhaken zur Nagelmaschine sind zur Halterung der Schieferplattenhaken einerseits des Trägers eine Vielzahl von Aufnahmen hintereinander angeordnet, in denen die Schieferplattenhaken mit ihrer Sicke zu haltern sind, und andererseits des Trägers zwei Führungsstreifen entlang der beiden Längskanten des Trägers angeordnet, deren Funktion es ist, dass der Magazinstreifen in der Nagelmaschine zu transportieren ist.

Die Aufnahmen für die Schieferplattenhaken werden durch Lamellen gebildet, die aus einer ersten Flachseite des Trägers vorspringen. Je eine Lamelle zur linken und zur rechten Seite einer Aufnahme ist so geformt, dass die Sicke des Schieferplattenhakens formschlüssig einführbar ist und dort hinein passt.

Die Erfindung sieht vor, dass die Aufnahmen für die Schieferplattenhaken in der Längsrichtung des Trägers den gleichen Abstand voneinander aufweisen. Dadurch ist die Positionierung des Magazinstreifens in der Nagelmaschine einfach zu lösen, und auch die Herstellung des Magazinstreifens ist kostengünstig durchzuführen. Insbesondere ist vorgesehen, dass die Lamellen an den äußeren Kanten mit Noppen, also kurzen Profilstücken, ausgestattet sind, die zu einem sicheren Halten und Ausrichten der Schieferplattenhaken in den Aufnahmen des Magazinstreifens führen.

Eine günstige Form für die Führungsstreifen ist, dass sie über eine den Lamellen abgewandte Flachseite des Trägers vorstehen. Die Breite eines Führungsstreifens ist so gewählt, dass die runden Vertiefungen vollständig in dem Führungsstreifen liegen. Dadurch können beide Führungsstreifen mit solchen runden Vertiefungen ausgestattet werden, die in einer Reihe längs der Führungsstreifen angeordnet sind.
Die Nagelmaschine enthält eine Transporteinrichtung, die den Magazinstreifen in die Maschine hinein bewegt, so dass der Magazinstreifen an der richtigen Stelle sitzt und dort ein Schieferplattenhaken mit dem Treibkolben herausgeschlagen werden kann. Dazu greift eine Vorrichtung in der Transporteinrichtung in die Vertiefungen ein, und führt die Schieferplattenhaken in den Aufnahmen in definierten Abständen der Nagelmaschine zu, die diese verarbeitet.

Eine Weiterbildung der Erfindung sieht vor, dass die Vertiefungen in einer definierten Zuordnung zu den Aufnahmen für die Schieferplattenhaken in dem Magazinstreifen angeordnet sind. Dann kann allein die Transporteinrichtung dafür sorgen, dass die Aufnahmen in der Nagelmaschine an der richtigen Stelle positioniert werden.

Diese Magazinstreifen sind üblicherweise aus Kunststoff gespritzt. Eine standardmäßige Ausführung sieht hierbei vor, dass der Magazinstreifen mit etwa 25 Schieferplattenhaken beladbar ist.

Besonders vorteilhaft ist, dass der Magazinstreifen kein Wegwerfprodukt ist, sondern nach dem Gebrauch mehrfach wieder verwendbar ist. Er kann jederzeit wieder mit Schieferplattenhaken neu beladen werden, da er nicht durch den Gebrauch zerstört bzw. verbraucht wird. Durch gleichmäßige Abstände der Aufnahmen in der Längsrichtung des Magazinstreifens voneinander lässt sich die maschinelle Bestückung mit den Schieferplattenhaken besonders einfach lösen.

Eine Ausführungsform der Erfindung ist beispielhaft in den Figuren dargestellt.
- Fig. 1: zeigt einen bestückten Magazinstreifen lamellenseitig in Draufsicht,
- Fig. 2: zeigt einen vergrößerten Ausschnitt dazu eines unbestückten Magazinstreifens,
- Fig. 3: zeigt einen vergrößerten führungsseitigen Ausschnitt des Magazinstreifens,
- Fig. 4: zeigt einen Schieferplattenhaken in seitlicher Sicht.

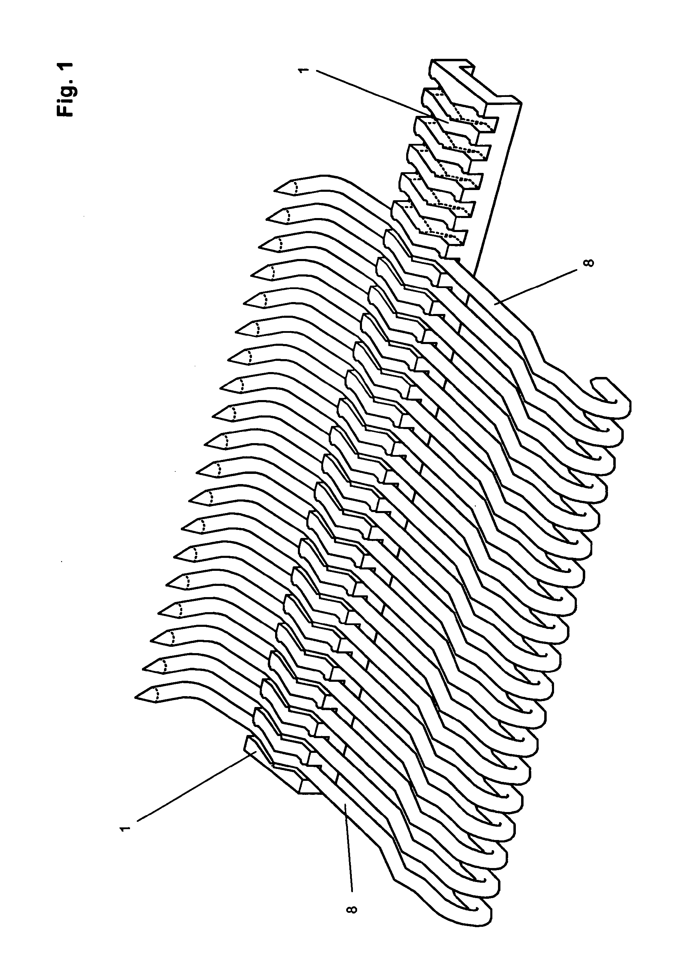

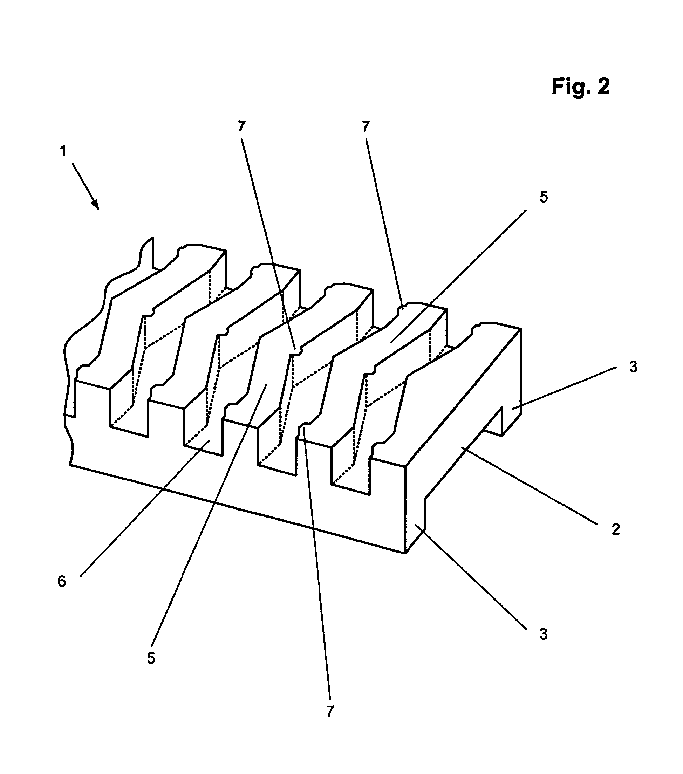

In Fig. 1 ist ein bestückter Magazinstreifen 1 lamellenseitig in Draufsicht dargestellt, der zur Aufnahme von Schieferplattenhaken 8 bestimmt ist. Diese Schieferplattenhaken 8 sollen mittels einer Nagelmaschine in eine Tragkonstruktion eingeschossen werden, und sie dienen dazu, Schieferplatten dort sicher zu halten. In der Figur sind in mehr als der Hälfte der Halterungen des Magazinstreifens 1 Schieferplattenhaken 8 eingeführt; einige wenige Plätze sind nicht mit Schieferplattenhaken 8 bestückt, um die Anordnung der Lamellen und Aufnahmen auf den Magazinstreifen 1 zu verdeutlichen, wie es in Fig. 2 näher erläutert ist.

Die Spitzen der Schieferplattenhaken 8 zeigen quer zur Unterseite des Magazinstreifens in entgegen gesetzter Richtung zur Flachseite des Magazinstreifens 1, so dass sie durch die Nagelmaschine aus dem Magazinstreifen 1 heraus direkt in die Tragkonstruktion eingeschossen werden können.

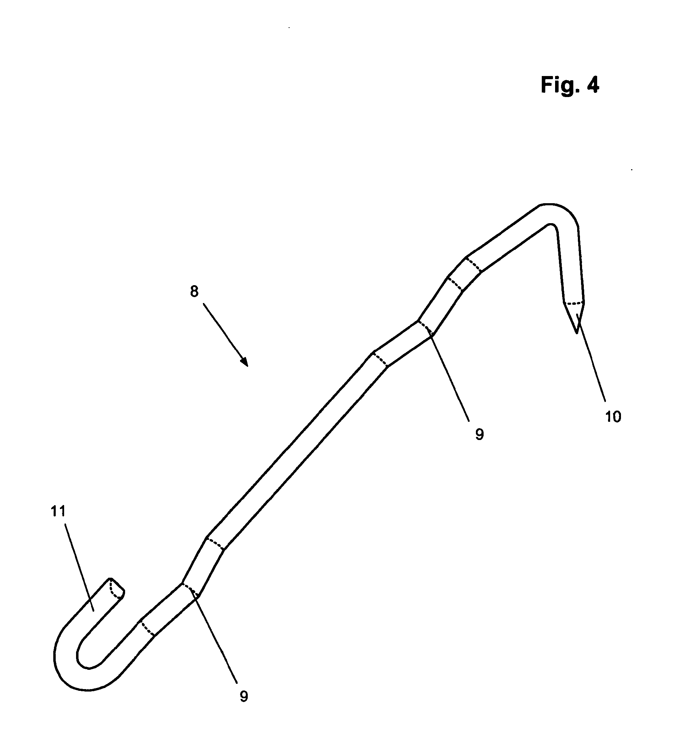

Fig. 2 zeigt einen vergrößerten lamellenseitigen Ausschnitt des Magazinstreifens 1. Die Aufnahmen 6 für die Schieferplattenhaken werden durch die Lamellen 5 gebildet, die in dessen Längsrichtung nebeneinander auf einem Träger 2 des Magazinstreifens 1 angeordnet sind. Dabei ist im Bild die linke Seite jeder Lamelle 5 entsprechend der Einbuchtung der Sicke des Schieferplattenhakens gestaltet; die rechte Seite jeder Lamelle 5 ist entsprechend der Ausbuchtung der Sicke des Schieferplattenhakens gestaltet. Die Details des Schieferplattenhakens sind zu Fig.4 näher erläutert.

Zusätzlich sind die Lamellen 5 mit Noppen 7 an ihren äußeren Enden ausgestattet; je zwei Noppen 7 sind an den äußeren Enden einer linken Lamellenseite und eine Noppe 7 ist in der Mitte einer rechten Lamellenseite. Hierdurch sind die Schieferplattenhaken beim Einführen in die Aufnahme 6 ausgerichtet und sicher gehalten.

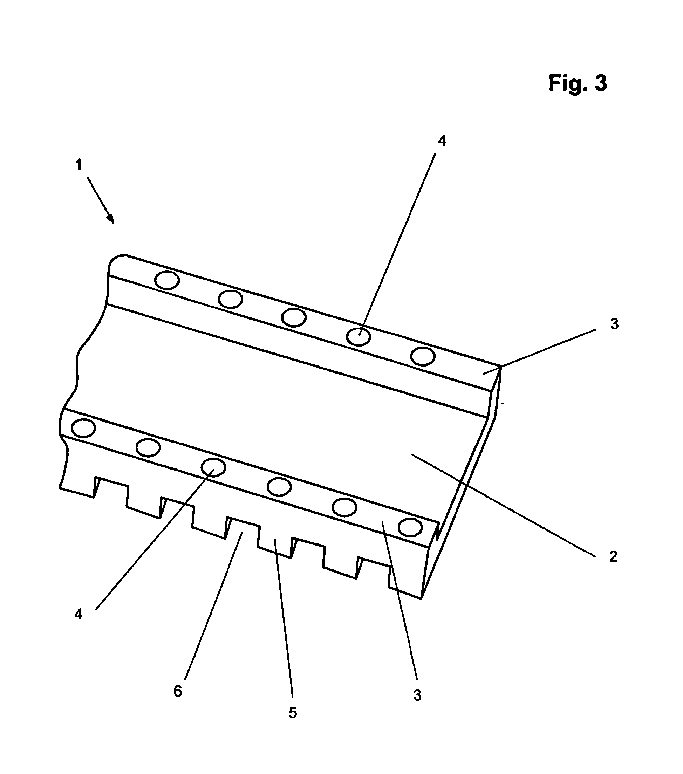

Fig. 3 zeigt einen vergrößerten Ausschnitt führungsstreifenseitig des Magazinstreifens 1. Es ist je eine Führungsstreifen 3 an den beiden Längskanten des Trägers 2 eines Magazinstreifens angeordnet. Die Führungsstreifen 3 sind so gestaltet, dass sie aus der den Lamellen abgewandten Flachseite des Trägers 2 vorspringen und mit runden Vertiefungen 4 ausgestattet, die in gleichmäßigen Abständen in einer Reihe auf den Führungsstreifen 3 angeordnet sind.

Aus der Darstellung ist ersichtlich, dass auf dem unteren Führungsstreifen 3 jeweils eine Vertiefung 4 einer Lamelle 5 zugeordnet ist, und auf dem oberen Führungsstreifen 3 jeweils eine Vertiefung 4 einer Aufnahme 6 zugeordnet ist. Hierdurch kann allein die Transportvorrichtung dafür sorgen, dass die Aufnahmen 6 mit den Schieferplattenhaken an der richtigen Stelle in der Nagelmaschine positioniert werden.

In Fig. 4 ist ein Schieferplattenhaken 8 in seitlicher Sicht dargestellt. Das im Bild obere Ende des Schieferplattenhakens 8 besitzt eine Spitze 10, mit der er in die Tragkonstruktion aus Holz einzusetzen ist. Am im Bild unteren Ende besitzt er einen Haken 11 zur Aufnahme und sicheren Halt von Schieferplatten. Im mittleren Bereich ist er mit zwei Sicken 9 ausgestattet, mit denen der Schieferplattenhaken 8 in den Magazinstreifen eingeführt und dort gehalten wird, wobei insbesondere die spitzennahe Sicke 9 entsprechend einer eingesetzten Nagelmaschine verwendet wird.

### Bezugszeichenliste

- 1: Magazinstreifen
- 2: Träger
- 3: Führungsstreifen
- 4: Vertiefung
- 5: Lamelle
- 6: Aufnahme
- 7: Noppe
- 8: Schieferplattenhaken
- 9: Sicke
- 10: Spitze
- 11: Haken

## Patentansprüche

1. Magazinstreifen (1) zum Halten von mehreren Schieferplattenhaken (8), die einenends eine abgewinkelte Spitze (10) und andernends einen Haken (11) aufweisen, wozu der Magazinstreifen (1) aus einem einteiligen streifenförmigen Träger (2) besteht, aus dessen einer Flachseite sich zueinander parallel Lamellen (5) erstrecken, zwischen denen die Schieferplattenhaken (8) jeweils in deren mittleren Bereich zwischen deren Spitze (10) und deren Haken (11) seitlich fixiert zu haltern sind,
**dadurch gekennzeichnet, dass** an den Schieferplattenhaken (8) in dem mittleren Bereich eine Sicke (9) mit einer Einbuchtung quer zur Spitze (10) vorgesehen ist und die Lamellen (5) jeweils so gestaltet sind, dass sie an einer Seite in eine solche Einbuchtung formschlüssig hineinpassen und an ihrer anderen Seite eine entsprechende Ausbuchtung der Sicke (9) eines benachbarten Schieferplattenhakens (8) aufnehmen könne, und dass der Träger (2) auf der den Lamellen (5) abgewandten Seite längskantenseitig Führungsstreifen (3) für eine Führung in einer Nagelmaschine trägt.

2. Magazinstreifen nach Anspruch 1, **dadurch gekennzeichnet, dass** die Lamellen (5) an ihren freien_Enden Noppen (7) tragen, die die Schieferplattenhaken (8) zerstörungsfrei lösbar zurückhalten.

3. Magazinstreifen nach Anspruch 2, **dadurch gekennzeichnet, dass** die Noppen (7) einerseits der Lamellen (5) jeweils endseitig und andererseits mittig angeordnet sind.

4. Magazinstreifen nach Anspruch 1, **dadurch gekennzeichnet, dass** die Führungsstreifen (3) reihenförmig Vertiefungen (4) enthalten.

5. Magazinstreifen nach Anspruch 4, **dadurch gekennzeichnet, dass** die Vertiefungen (4) und die Lamellen (5) jeweils einander zugehörig angeordnet sind.

6. Magazinstreifen nach Anspruch 4 oder 5, **dadurch gekennzeichnet, dass** die Vertiefungen (4) rund sind.

7. Magazinstreifen nach einem der vorstehenden Ansprüche, **dadurch gekennzeichnet, dass** mit seinen Lamellen (5) insgesamt etwa 25 Schieferplattenhaken (8) zu haltern sind.

8. Magazinstreifen nach einem der vorstehenden Ansprüche, **dadurch gekennzeichnet, dass** er aus Kunststoff einstückig hergestellt ist und wiederholt verwendbar ist.

## Claims

1. Magazine strip (1) for holding several slate plate hooks (8), which at one end have an angled tip (10) and at the other end have a hook (11), wherein the magazine strip (1) consists of a one-piece strip-shaped carrier (2), from one flat side of which protrude parallel lamellae (5), between which the slate plate hooks (8) are to be held, each fixed at the sides in the central part between the tip (10) and the hook (11),
**characterized in that** on the slate plate hooks (8), in the central part, an indent (9) is provided, with an indentation transverse to the tip (10), and the lamellae (5) are each shaped in such a way that, at one side, they fit in a form-fitting manner into in such an indent and, at their other side, they can accommodate a corresponding convexity of the indent (9) of an adjacent slate plate hook (8), and that the carrier (2), on the side opposite of the lamellae (5), at its longitudinal edges, carries guide strips (3) in order to be guided in a nailing machine.

2. Magazine strip according to claim 1, **characterized in that** the lamellae (5) carry knots (7) at their free edges, which retain the slate plate hooks (8) so they can be removed non-destructively.

3. Magazine strip according to claim 2, **characterized in that** on one side of the lamellae (5) the studs (7) are located centrally, and on the other side they are located at each end respectively.

4. Magazine strip according to claim 1, **characterized in that** the guide strips (3) contain rows of recesses (4).

5. Magazine strip according to claim 4, **characterized in that** the recesses (4) and the lamellae (5) are arranged in such a way that one corresponds to the other.

6. Magazine strip according to claim 4 or 5, **characterized in that** the recesses (4) are round.

7. Magazine strip according to one of the preceding claims, **characterized in that** its lamellae (5) can hold a total of about 25 slate plate hooks (8).

8. Magazine strip according to one of the preceding claims, **characterized in that** it is made from plastic in one piece and can be used repeatedly.

## Revendications

1. Ruban de stockage (1) pour maintenir plusieurs crochets de plaque d'ardoise (8), qui ont à une extrémité une pointe coudée (10) et à l'autre extrémité un crochet (11), le ruban de stockage (1) étant constitué d'un support (2), d'un seul tenant, en forme de bande, de l'une des faces duquel s'étendent des lamelles (5) parallèles, entre lesquelles les crochets de plaque d'ardoise (8) peuvent être maintenus, chacun fixé sur les côtés dans sa partie centrale entre la pointe (10) et le crochet (11),
**caractérisé en ce que** sur les crochets de plaque d'ardoise (8), dans la partie centrale, un coude (9) est fourni, avec un cambrage transverse à la pointe (10), et que chacune des lamelles (5) est formée de telle manière que, d'un côté, elle entre dans un tel cambrage dans une liaison mécanique et, de l'autre côté, elle peut accueillir une convexité correspondante du coude (9) d'un crochet de plaque d'ardoise avoisinant (8), et que le support (2), sur la face opposé aux lamelles (5), sur ses bords longitudinaux, porte des bandes de guidage (3) afin d'être guidé dans une machine de clouage.

2. Ruban de stockage selon la revendication 1, **caractérisé en ce que** les lamelles (5) ont des picots (7) sur leurs extrémités libres, pour retenir les crochets de plaque d'ardoise (8), d'une telle manière qu'ils puissent être retirés de façon non destructive.

3. Ruban de stockage selon la revendication 2, **caractérisé en ce que**, sur un côté des lamelles (5), les picots (7) sont situés au centre, et, sur l'autre côté, ils sont situés à chaque extrémité, respectivement.

4. Ruban de stockage selon la revendication 1, **caractérisé en ce que** les bandes de guidage (3) contiennent des rangées d'empreintes (4).

5. Ruban de stockage selon la revendication 4, **caractérisé en ce que** les empreintes (4) et les lamelles (5) sont disposés d'une telle manière que l'une correspond à l'autre.

6. Ruban de stockage selon la revendication 4 ou 5, **caractérisé en ce que** les empreintes (4) sont ronds.

7. Ruban de stockage selon l'une des revendications précédentes, **caractérisé en ce qu'**il peut maintenir un total d'environ 25 crochets de plaque d'ardoise (8) avec ses lamelles (5).

8. Ruban de stockage selon l'une des revendications précédentes, **caractérisé en ce qu'**il est fait de matière plastique en une seule pièce et peut être utilisé à plusieurs reprises.
